# EUROPÄISCHE PATENTSCHRIFT

(11) **EP 0 559 242 B1**
(45) Veröffentlichungstag und Bekanntmachung des Hinweises auf die Patenterteilung: **27.12.1996**
(21) Anmeldenummer: 93108441.2
(22) Anmeldetag: 19.05.1988
(51) Int. Cl.: A01C 17/00

(54) **Schleuderdüngerstreuer**
Broadcaster
Expandeur centrifuge

(30) Priorität: 29.05.1987 DE 3729871; 29.05.1987 DE 3718145; 23.10.1987 DE 3735896; 29.02.1988 DE 3806439
(43) Veröffentlichungstag der Anmeldung: 08.09.1993
(62) Teilanmeldung aus: 88108032.9
(73) Patentinhaber: Amazonen-Werke H. Dreyer GmbH & Co. KG, D-49205 Hasbergen (DE)
(72) Erfinder: Dreyer, Heinz, Dr., W-4507 Hasbergen/Gaste (DE)
(74) Vertreter: Grünecker, Kinkeldey, Stockmair & Schwanhäusser Anwaltssozietät

(56) Entgegenhaltungen:
- EP-A- 0 158 335
- EP-A- 0 240 734
- FR-A- 2 450 551

## Beschreibung

Die Erfindung betrifft einen Schleuderdüngerstreuer gemäß des Oberbegriffes des Patentanspruches 1.

Ein derartiger Schleuderdüngerstreuer ist beispielsweise durch die DE-PS 28 35 011 bekannt. Mit einem derartigen Schleuderdüngerstreuer, bei dem die Drehzahl der Streueinrichtung ca. 700 U/min beträgt, lassen sich Arbeitsbreiten von 10 bis 24 m und bei einigen Düngern auch Arbeitsbreiten von 27 m erreichen. Eine Arbeitsbreite von 24 m ist jedoch nicht mit allen Düngern, vor allem nicht mit kleineren Körnungen, wie beispielsweise Harnstoff möglich.

Seit einiger Zeit sind nun in der Praxis Pflanzenschutzspritzen mit 32 und 36 m Arbeitsbreite auf Großbetrieben im praktischen Einsatz. Somit werden also zwangsläufig auch für Düngerstreuer derartig große Arbeitsbreiten gefordert.

Durch den Prospekt "Precilarge" der Firma Nodet ist nun ein Exaktdüngerstreuer mit einer Streubreite von 32 m beschrieben. Dieser Düngerstreuer weist auf jeder Seite der Maschine um in Fahrtrichtung verlaufende Achsen schnell umlaufende Wurfwalzen auf, mit denen der Dünger seitlich der Maschine abgeschleudert wird. Diese Maschine ist relativ schwer und relativ teuer, weil sie relativ viele bewegte Teile aufweist. Die Verteilgenauigkeit bei diesem Düngerstreuer läßt jedoch, wie Untersuchungen gezeigt haben, in vielerlei Hinsicht zu wünschen übrig. Vor allem die Düngerverteilung ist zu ungleichmäßig.

Des weiteren sind pneumatische Düngerstreuer mit Auslegern bekannt, die eine Arbeitsbreite bis 24 m aufweisen. Man mußte bei dem Bau der pneumatischen Düngerstreuer aber, erkennen, daß Arbeitsbreiten über 24 m aufgrund des Gewichtes und des Preises fast schon unverkäuflich sind.

Der Erfindung liegt nun die Aufgabe zugrunde, mit einfachsten Maßnahmen einen Schleuderdüngerstreuer zu schaffen, mit welchem Arbeitsbreiten von 36 m und mehr mit einer äußerst gleichmäßigen Düngerverteilung zu erzielen sind.

Diese Aufgabe wird erfindungsgemäß durch die kennzeichnenden Merkmale des Patentanspruches 1 gelöst.

Infolge dieser Maßnahmen wird ein Scheibenwurfstreuer (Zentrifugaldüngerstreuer mit um vorzugsweise aufrechte Achsen umlaufenden Schleuderscheiben) geschaffen, der in seiner Bauart sehr leicht, einfach, robust und preiswert gegenüber vergleichbaren Schleuderstreuern, die die erfindungsgemäßen Arbeitsbreiten von 36 m, noch nicht einmal erreichen und erst recht gegenüber den Auslegerstreuern, wie pneumatischen Düngerstreuern, und mit dem es in einfachster Weise möglich ist, Arbeitsbreiten von 32, 34 und auch 36 m und mehr bei einer sehr gleichmäßigen Düngerverteilung über die gesamte Streu- und Arbeitsbreite zu schaffen. Von entscheidender Bedeutung ist, um eine zu starke Beschleunigung der Düngerpartikel zu vermeiden, so daß eine Gefahr der Zerschlagung dieser Düngerpartikel nicht besteht, daß der Dünger von oben in Nähe der Drehachse, etwa nur 5 bis 15 cm entfernt von der Scheibendrehachse auf die Scheiben aufgegeben wird. Hierdurch wird eine langsame und schonende Beschleunigung des Düngers auf die erforderliche große Beschleunigung erreicht, bevor der Dünger abgeschleudert wird um den Dünger über die großen Arbeitsbreiten bis zu 36 m werfen zu können, wobei die Wurfweite sogar teilweise nach weit mehr als 36 m beträgt. Eine einfache Anpassung der Wurfschaufeln an die verschiedenen Düngersorten wird dadurch erreicht, daß die Wurfschaufeln in Scheibenebene winkelverschwenkbar gegenüber der Radialen angeordnet und mittels Skalen oder Markierungselemente exakt einstellbar sind, wodurch die bei diesen großen Streubreiten besonders problematischen bzw. wichtige Einstellungen der Maschine auf verschiedene Düngersorten in äußerst einfacher und exakter Weise erreicht wird. Dadurch, daß sehr lange Wurfschaufeln zum Erreichen der Arbeitsbreite von 36 m und mehr, wobei die Wurfschaufeln mit ihren äußeren Enden Umlaufbahnen mit einem Durchmesser von mehr als 80 cm, vorzugsweise 90 bis 100 cm beschreiben, werdendet werden, wird eine schonende Beschleunigung der Düngerkörnerohne ein Zerschlagen der Düngerkörner auf die erforderliche große Abwurfgeschwindigkeit erreicht. Infolge dieser erfindungsgemäßen Maßnahmen wird der Dünger über Arbeitsbreiten bis zu 36 m und mehr in bisher nie erreichter gleichmäßiger Weise für den Fachmann völlig überraschend verteilt.

Des weiteren können zusätzliche Einstellungen, wie Drehzahländerungen, Höhenverstellung und Neigungverstellung der gesamten Maschine zusätzlich noch Verbesserungen der Streuarbeit ergeben, sie sind aber aufgrund der vorgeschlagenen erfindungsgemäßen Maßnahmen meist nur noch in Ausnahmefällen bei Problemdüngern erforderlich.

Um eine äußerst gleichmäßige Verteilung des Düngers über die bisher nie erreichten Arbeitsbreite von 36 m in äußerst gleichmäßiger Weise in einfacher Weise zu erreichen; ist erfindungsgemäß vorgesehen, daß die Wurfschaufeln derart gestaltet oder so einstellbar sind, daß die auf den jeweiligen Schleuderscheiben angeordneten Wurfschaufeln jeweils verschiedene Sektoren des Streubildes bestreuen.

Zur Spätdüngung sind die Maschinen in erfindungsgemäßer Weise selbst angehoben oder vorzugsweise werden die Schaufeln in bekannter Weise mit schwenkbaren Flügeln (sog. Schwenkschaufeln) ausgestattet oder gegen sog. Spätdüngungsschaufeln ausgetauscht. Die 36 m Arbeitsbreite ist nach heutiger Erkenntnis dabei gerade für den Landwirt von größtem Interesse, da er beispielsweise wegen seiner 12 m Spritze seine Fahrgassen auf 12 m anlegt. Die erste Fahrgasse liegt dann 6 m vom Feldrand entfernt, die nächste 12 m weiter, also 12 m plus 6 m ergeben 18 m vom Feldrand entfernt. Diese zweite Fahrgasse ist dann auch genau die richtige Fahrgasse für die 36 m Arbeitsbreite zum Düngen. Die dreifache Arbeitsbreite gegenüber dem Fahrgassenabstand ist also für sehr viele Landwirte noch interessanter und passender als die doppelte Arbeitsbreite. Gerade deshalb ist auch das Erreichen von 36 m Arbeitsbreite beim Düngen mit einer äußerst gleichmäßigen Düngerverteilung an Stelle von bisher erreichter 24 m Arbeitsbreite von ganz besonderer praktischer Bedeutung. Bisher wurde in der Fachwelt das Erreichen von 36 m Arbeitsbreite mit einer äußerst gleichmäßigen Düngung und einer ausreichenden Überlappung der nebeneinander liegenden Streubahnen für unerreichbar gehalten. Erst die vorgeschlagene Erfindung schafft hier Abhilfe und einen neuen bahnbrechenden Weg.

Weiterhin ist erfindungsgemäß vorgesehen, daß im Bereich der Wurfschaufeln an den Schleuderscheiben in radialer Richtung sich erstreckende Verlängerungsstücke angeordnet sind und daß in diesen Verlängerungsstücken jeweils Arretierungselemente zum Arretieren der in Scheibenebene winkelverschwenkbaren Wurfschaufeln angeordnet sind. Diese erfindungsgemäße Maßnahme wird in bevorzugter Weise bei den Schleuderscheiben angewendet, welche mit den langen Wurfschaufeln zum Erreichen der 36 m Arbeitsbreite ausgestattet sind. Durch diese Verlängerungsstücke wird einerseits eine vorteilhafte Stabilisierung der über die Schleuderscheiben weit überstehenden Wurfschaufelenden erreicht. In bevorzugter Weise werden nämlich Schleuderscheiben mit einem relativ kleinen Durchmesser verwendet, um so das Anlaufmoment der Schleuderscheiben möglichst gering zu halten. Weiterhin ist erfindungsgemäß vorgesehen, daß für jede Wurfschaufel zwei in radialem Abstand zueinander angeordnete Langlöchern vorgesehen sind und daß in diesen Langlöchern an den Wurfschaufeln angeordnete Schraubbolzen ragen, auf welche Flügelmuttern angeordnet sind. Hierdurch wird eine äußerst einfache Verstellung und Arretierung der Wurfschaufeln in den unterschiedlichen Winkelstellungen in Scheibenebene erreicht. Damit die Wurfschaufeln mit den Flügelmuttern in äußerst einfacher Weise auch sicher auf den Schleuderscheiben festgeklemmt werden, ist erfindungsgemäß vorgesehen, daß die Schleuderscheiben konkav ausgebildet sind, während die Wurfschaufeln linear ausgebildet sind. Infolge dieser Maßnahmen wird eine sehr gute Verspannung der Schaufel auf der Schleuderscheibe erreicht. Die untere gerade Fläche der Schaufel wird durch die Schraubbolzen und Flügelmuttern gegen die konkav ausgebildete Fläche der Wurfschaufel gezogen, so daß sich die sehr gute Verspannung ergibt.

Des weiteren ist erfindungsgemäß vorgesehen, daß auf jeder Schleuderscheibe zumindest zwei unterschiedlich lange Wurfschaufeln angeordnet sind und daß der kürzeren Wurfschaufel ein größeres und/oder schwereres Verlängerungsstück als der längeren Wurfschaufel zugeordnet ist. Somit wird ein Massenausgleich bzw. ein Unwuchtausgleich durch die Verlängerungsstücke erreicht.

Es ist auch möglich, an Stelle der an den Schleuderscheiben angeordneten Verlängerungsstücke die Schleuderscheibe selbst oval oder anders auszubilden bzw. die Verlängerungsstücke unmittelbar in die Form der Schleuderscheibe zu integrieren oder die Schleuderscheibe mit den Verlängerungsstücken einstückig herzustellen.

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäß ausgebildeten Schleuderstreuer in der Ansicht von hinten und
- Fig. 2: die erfindungsgemäß ausgebildete Schleuderscheibe zum Erreichen von Arbeitsbreiten bis zu 36 m in der Draufsicht.

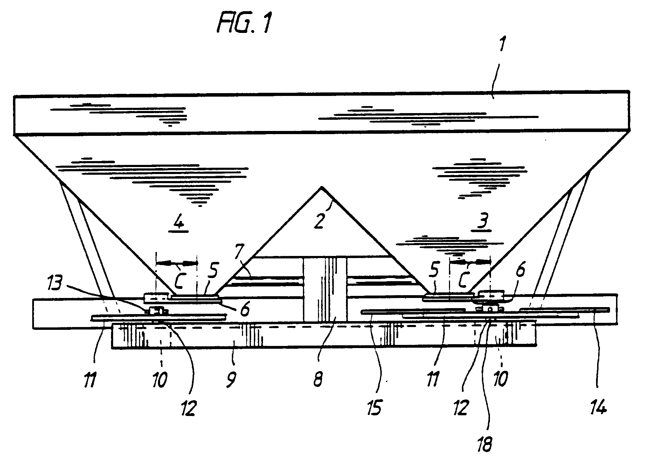

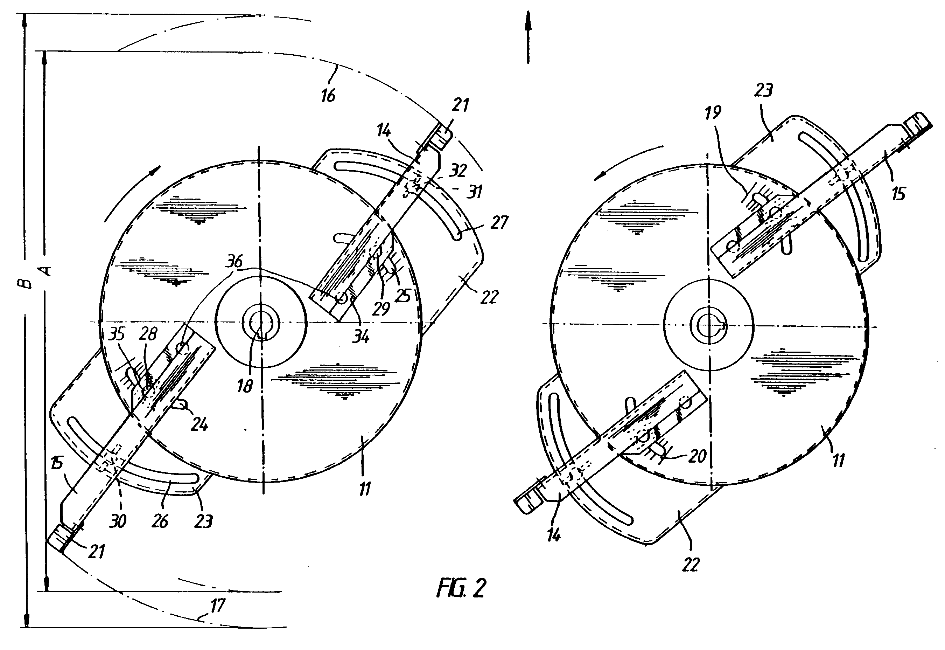

Der Schleuderdüngerstreuer weist den Vorratsbehälter 1 auf, wobei der untere Bereich des Vorratsbehälters durch ein dachförmiges Mittelteil 2 in die Auslauftrichter 3 und 4 unterteilt ist. Die Auslauftrichter 3 und 4 sind durch die Bodenplatten 5 nach unten abgeschlossen. In den Bodenplatten 5 befinden sich die Auslauföffnungen, welche über die Schieber 6 in ihrer Größe einstellbar sind. Hierdurch ist es möglich, den sich im Vorratsbehälter 1 befindlichen Dünger in einstellbaren Mengen auszubringen. In die unteren Trichterspitzen 3 und 4 ragt die horizontal liegend angeordnete Rührwelle 7, welche über das Getriebe 8 angetrieben wird. An dem Rahmen 9 des Schleuderdüngerstreuers sind die Getriebe 10 angeordnet, welche jeweils eine Schleuderscheibe 11 tragen. Diesen Schleuderscheiben 11 wird durch die sich in den Bodenplatten 5 befindlichen Auslauföffnungen in Verbindung mit den Schiebern 6 der sich im Vorratsbehälter 1 befindliche Dünger in einstellbaren Mengen zugeführt. Über das Getriebe 8, welches auf der Vorderseite eine Eingangswelle zur Kupplung mit Zapfwelle eines Schleppers aufweist, sowie über die Getriebe 10 werden die Schleuderscheiben 11, die auf den Getriebeausgangswellen 12 der Getriebe 10 mittels des Verschlusses 13 leicht lösbar befestigt sind, mit einer Drehzahl von 600 bis 1000 U/min, vorzugsweise 700 bis 900 U/min rotierend und zwar im entgegengesetzten Drehsinn angetrieben. Die auf den Schleuderscheiben 11 angeordneten Wurfschaufeln 14 und 15 beschreiben mit ihren äußeren Enden Umlaufbahnen 16 und 17 mit einem Durchmesser A und B von größer als 80 cm, vorzugsweise 90 bis 100 cm. Der Dünger wird aus dem Vorratsbehälter 1 über die sich in der Bodenplatte 5 befindliche Auslauföffnung in der Nähe der Rotationsachse 18, die durch die Schleuderscheibenwelle 12 verläuft, der Schleuderscheiben 11, etwa maximal 5 bis 15 cm von der Rotationsachse 18, wie durch das Maß C in Fig. 1 angedeutet, auf die jeweilige Schleuderscheibe 11 aufgegeben. Die Wurfschaufeln 14 und 15 sind in Scheibenebene winkelverschwenkbar gegenüber der Radialen auf den Schleuderscheiben 11 angeordnet und mittels der Skalen 19 und 20 exakt nach in einer Streutabelle enthaltenen Werten einstellbar. Mittels dieser entsprechend Fig. 2 beschriebenen Schleuderscheiben 11 mit den Wurfschaufeln 14 und 15 und der entsprechenden Anstellung der Wurfschaufeln 14 und 15 mit den vorgegebenem Winkel zur Radialen läßt sich praktisch für jede Düngersorte eine Arbeitsbreite von 36 m erreichen, wobei der Dünger über einen Wurfbereich bis zu 40 und 50 m weit abgeschleudert wird, wobei dann durch das Überlappen der nebeneinander liegenden Streubahnen eine äußerst gleichmäßige Düngerverteilung über Arbeitsbreiten bis zu 36 m erreicht wird.

Die Wurfschaufeln 14 und 15 sind derart gestaltet und so einstellbar, daß sie jeweils verschiedene Sektoren des Streubildes bestreuen, um so eine äußerst gleichmäßige Düngerverteilung zu erreichen.

An den äußeren Enden der Wurfschaufeln 14 und 15 sind die in aufrechter Ebene verschwenkbaren Ablenkflächen 21 angeordnet; mittels dieser Ablenkflächen 21 läßt sich in der nach unten geklappten Stellung die Normaldüngung durchführen, während zur Spätdüngung die Ablenkflächen 21 um einen bestimmten Winkel nach oben geklappt werden, um so die Düngerpartikel mit einem größeren Abwurfwinkel über di bereits hoch aufgewachsenen Pflanzen abwerfen zu können.

Auf den Schleuderscheiben 11 sind die beiden Wurfschaufeln 14 und 15 angeordnet, die eine unterschiedlich große Länge aufweisen. Die Wurfschaufel 15 ist länger als die Wurfschaufel 14. In dem Bereich der Wurfschaufeln 14 und 15 sind an den Schleuderscheiben 11 die sich in radialer Richtung erstreckenden Verlängerungsstücke 22 und 23 angeordnet. In der Schleuderscheibe 11 sind jeweils im Bereich der Wurfschaufeln 14 und 15 die Langlöcher 24 und 25 angeordnet. In den Verlängerungsstücken 22 und 23 sind die als Arretierungselemente ausgebildeten Langlöcher 26 und 27 angeordnet. In die Langlöcher 24, 25, 26 und 27 fassen die an den Wurfschaufeln 14 und 15 befestigten Schraubbolzen 28, 29, 30 und 31. Die Langlöcher 24, 25, 26 und 27 sind derart lang ausgebildet, daß die Wurfschaufeln 14 und 15 über den vorgesehenen Bereich in Scheibenebene verschwenkt werden können und mit unterschiedlichen Winkeln zur Radialen einstellbar sind. Auf der Unterseite der Schleuderscheibe 11 bzw. der Verlängerungsstücke 22 und 23 sind auf die Schraubbolzen Flügelmuttern 32 aufgesetzt über welche die Wurfschaufeln 14 und 15 in Verbindung mit den Schraubbolzen 28,29,30 und 31 die Wurfschaufeln in der gewünschten Position genau festzuklemmen sind. Die Langlöcher 24 und 26, sowie 25 und 27 sind jeweils in einem radialen Abstand zueinander angeordnet. Die Schleuderscheiben 11 und die Verlängerungsstücke 22 sind in der Draufsicht gesehen nach unten konkav ausgebildet, während die untere Leitfläche 34 und 35 der Wurfschaufeln 14 und 15 linear ausgebildet sind. Hierdurch ergibt sich, daß in nicht angezogenem Zustand der Wurfschaufeln 14 und 15 ein Abstand zwischen der Scheibe und der unteren Leitfläche 34 und 35 gegeben ist. Durch das Anziehen der Flügelmuttern 32 wird die untere Leitfläche 34 und 35 der Wurfschaufeln 14 und 15 gegen die Schleuderscheibe 11, sowie die Verlängerungsstücke 22 und 23 gezogen, so daß die Wurfschaufeln 15 verspannt werden und sich ein sehr fester Sitz der Wurfschaufeln 14 und 15 auf der Schleuderscheibe ergibt. Die Wurfschaufeln 14 und 15 lassen sich nach Lösen der als Arretierungselemente ausgebildeten Flügelmuttern 32 um den jeweiligen Drehbolzen 36, der als Reibschlußverbindung ausgebildet ist, verschwenken und anhand der Skalen 19 und 20 exakt einstellen.

Das Verlängerungsstück 22, welches der kürzeren und leichteren Wurfschaufel 14 zugeordnet ist, ist größer sowie schwerer als das Verlängerungsstück 23, welches der längeren und schwereren Wurfschaufel 15 zugeordnet ist, ausgebildet. Hierdurch wird ein Massenausgleich sowie ein Unwuchtausgleich der Schleuderscheibe 11 und den Wurfschaufeln sowie eine Stabilisierung der Wurfschaufeln 14 und 15 erreicht.

Mit den Schleuderscheiben 11 und den entsprechend ausgebildeten Wurfschaufeln 14 und 15, welche mit ihren äußeren Enden Umlaufbahnen mit einem Durchmesser von größer als 80 cm, vorzugsweise 90 bis 100 cm beschreiben, sowie mit einer Drehzahl mit 600 bis 1000 U/min, vorzugsweise 700 bis 900 U/min angetrieben sind, sowie mit der Aufgabe des Düngers in der Nähe der Rotationsachse der Schleuderscheiben 11 und durch die Winkelverschwenkbarkeit der Wurfschaufeln in Scheibenebene läßt sich in äußerst gleichmäßiger und überraschender Weise der Dünger über Arbeitsbreiten bis zu 36 m verteilen.

## Patentansprüche

1. Schleuderdüngerstreuer mit einem Vorratsbehälter und zumindest zwei rotierend angetriebenen und Wurfschaufeln aufweisenden Schleuderscheiben, denen über einstellbare Dosierorgane der sich im Vorratsbehälter befindliche Dünger in einstellbaren Mengen zugeführt wird, dadurch gekennzeichnet, daß die Schleuderscheiben (11) mit einer Drehzahl von 600 bis 1000 U/min, vorzugsweise 700 bis 900 U/min, rotierend angetrieben sind, daß die auf den Schleuderscheiben (11) angeordneten Wurfschaufeln (15) mit ihren äußeren Enden Umlaufbahnen (16,17) mit einem Durchmesser (A,B) von größer als 80 cm, vorzugsweise 90 bis 100 cm, beschreiben, daß der Dünger aus dem Vorratsbehälter (1) über die Dosierorgane (5,6) in der Nähe der Rotationsachse (18) der Schleuderscheiben (11), etwa maximal 5 bis 15 cm von der Rotationsachse (18) entfernt auf die Schleuderscheiben (11) aufgegeben wird, daß die Wurfschaufeln (14,15) in Scheibenebene winkelverschwenkbar gegenüber der Radialen angeordnet und mittels Skalen oder Markierungselemente (19,20) exakt einstellbar sind.

2. Schleuderdüngerstreuer nach Anspruch 1, dadurch gekennzeichnet, daß die Wurfschaufeln (14,15) derart gestaltet oder so einstellbar sind, daß die auf den jeweiligen Schleuderscheiben (11) angeordneten Wurfschaufeln (14,15) jeweils verschiedene Sektoren des Streubildes bestreuen.

3. Schleuderdüngerstreuer nach Anspruch 1 oder 2, dadurch gekennzeichnet, daß die Schleuderscheiben (11) mit den Wurfschaufeln (14,15) abnehmbar angeordnet sind.

4. Schleuderstreuer nach Anspruch 1, dadurch gekennzeichnet, daß die Wurfschaufeln (14,15,38,39,45,46) in Scheibenebene winkelverschwenkbar und mit unterschiedlichen Winkeln zur Radialen einstellbar sind.

5. Schleuderdüngerstreuer nach einem oder mehreren der vorstehenden Ansprüche, dadurch gekennzeichnet, daß zur Spätdüngung Wurfschaufeln mit gegenüber der Normaldüngung größeren Abwurfwinkeln vorgesehen sind.

6. Schleuderdüngerstreuer nach einem oder mehreren der vorstehenden Ansprüche, dadurch gekennzeichnet, daß an den äußeren Enden der Wurfschaufeln (14,15,38,39,45,46) in aufrechter Ebene verschwenkbare Ablenkflächen (21) angeordnet sind.

7. Schleuderdüngerstreuer nach einem oder mehreren der vorstehenden Ansprüche, dadurch gekennzeichnet, daß in dem Bereich der Wurfschaufeln (14,15) an den Schleuderscheiben (11) in radialer Richtung sich erstreckende Verlängerungsstücke (22,23) angeordnet sind, daß in diesen Verlängerungsstücken jeweils Arretierungselemente (26,27, 30,31,32) zum Arretieren der in Scheibenebene winkelverschwenkbaren Wurfschaufeln (14,15) angeordnet sind.

8. Schleuderdüngerstreuer nach Anspruch 1, dadurch gekennzeichnet, daß die Arretierungselemente (26,27,30, 31,32) in den Verlängerungsstücken (22,23) als Langlöcher (26,27) ausgebildet sind, in welche an den Wurfschaufeln (14,15) angeordnete Bolzen ragen.

9. Schleuderdüngerstreuer nach Anspruch 1, 7 und/oder 8, dadurch gekennzeichnet, daß für jede Wurfschaufel (14,15) zwei in radialem Abstand zueinander angeordnete Langlöcher vorgesehen sind, daß in diese Langlöcher (24,25,26,27) an den Wurfschaufeln (14,15) angeordnete Schraubbolzen (28, 29,30,31) ragen, auf welchen Flügelmuttern (32) angeordnet sind.

10. Schleuderdüngerstreuer nach Anspruch 1,7,8 und/oder 9, dadurch gekennzeichnet, daß die Schleuderscheibe (11) konkav ausgebildet ist, und daß die Wurfschaufel (14,15) linear ausgebildet ist.

11. Schleuderstreuer nach Anspruch 7, dadurch gekennzeichnet, daß auf jeder Schleuderscheibe (11) zumindest zwei unterschiedlich lange Wurfschaufeln (14,15) angeordnet sind, daß der kürzeren Wurfschaufel (14) ein größeres und/oder schweres Verlängerungsstück (22) als der längeren Wurfschaufel (15) angeordnet ist.

## Claims

1. Centrifugal fertiliser broadcaster, including a hopper and at least two rotatably driven centrifugal discs, which are provided with throwing vanes, and to which the fertiliser in the hopper is supplied in adjustable quantities via adjustable metering members, characterised in that the centrifugal discs (11) are rotatably driven at a speed of 600 to 1000 rpm, preferably 700 to 900 rpm, in that the throwing vanes (15), disposed on the centrifugal discs (11), describe, with their external ends, circular paths (16, 17) with a diameter (A,B) greater than 80 cm, preferably 90 to 100 cm, in that the fertiliser is fed to the centrifugal discs (11) from the hopper (1) via the metering members (5,6) in the vicinity of the axis of rotation (18) of the centrifugal discs (11) roughly at a maximum spacing of 5 to 15 cm from the axis of rotation (18), and in that the throwing vanes (14,15) are disposed in the plane of the discs so as to be angularly pivotable relative to the radial and are exactly adjustable by means of scales or markings (19,20).

2. Centrifugal fertiliser broadcaster according to claim 1, characterised in that the throwing vanes (14,15) are so configured or are so adjustable that the throwing vanes (14,15), disposed on the respective centrifugal discs (11), broadcast fertiliser over different sectors of the broadcasting pattern.

3. Centrifugal fertiliser broadcaster according to claim 1 or 2, characterised in that the centrifugal discs (11), provided with the throwing vanes (14,15), are removably disposed.

4. Centrifugal fertiliser broadcaster according to claim 1, characterised in that the throwing vanes (14,15,38,39,45,46) are angularly pivotable in the plane of the discs and are adjustable at variable angles relative to the radial.

5. Centrifugal fertiliser broadcaster according to one or more of the preceding claims, characterised in that, for late fertilisation, throwing vanes are provided with greater throwing angles compared with those for normal fertilisation.

6. Centrifugal fertiliser broadcaster according to one or more of the preceding claims, characterised in that deflectors (21), which are pivotable in a vertical plane, are disposed at the external ends of the throwing vanes (14,15,38,39,45,46),

7. Centrifugal fertiliser broadcaster according to one or more of the preceding claims, characterised in that extension members (22,23), which extend in a radial direction, are disposed in the region of the throwing vanes (14,15) on the centrifugal discs (11), and in that locking means (26,27,30,31,32) are each disposed in these extension members to lock in position the throwing vanes (14,15) which are angularly pivotable in the disc plane.

8. Centrifugal fertiliser broadcaster according to claim 1, characterised in that the locking means (26,27,30,31,32) are configured as elongate slots (26,27) in the extension members (22,23), and bolts which are disposed on the throwing vanes (14,15) protrude into said slots.

9. Centrifugal fertiliser broadcaster according to claims 1, 7 and/or 8, characterised in that two elongate slots are provided for each throwing vane (14,15) and are disposed with a radial spacing therebetween, and in that screw bolts (28,29,30,31), which are disposed on the throwing vanes (14,15), protrude into these elongate slots (24,25,26,27), wing nuts (32) being disposed on said bolts.

10. Centrifugal fertiliser broadcaster according to claims 1,7,8 and/or 9, characterised in that the centrifugal disc (11) has a concave configuration, and in that the throwing vane (14,15) has a linear configuration.

11. Centrifugal fertiliser broadcaster according to claim 7, characterised in that at least two throwing vanes (14,15) of different lengths are disposed on each centrifugal disc (11), and in that a greater and/or heavy extension member (22) is associated with the shorter throwing vane (14) than is associated with the longer throwing vane (15).

## Revendications

1. Epandeur centrifuge d'engrais comprenant :
- un réservoir d'alimentation,
- deux disques d'épandage entraînés en rotation, munis de palettes d'éjection (15),
- des organes de dosage réglables pour doser l'engrais du réservoir alimentant les disques d'épandage,
caractérisé en ce que
- les disques d'épandage (11) tournent à une vitesse de rotation comprise entre 600 et 1000 t/min et de préférence entre 700 et 900 t/min,
- les palettes d'éjection (15) portées par les disques d'épandage (11) décrivent avec leurs extrémités extérieures des trajectoires (16, 17) ayant un diamètre (AB) supérieur à 80 centimètres et de préférence de 90 à 100 centimètres,
- l'engrais est fourni par le réservoir (1) par l'intermédiaire des organes de dosage (5, 6) à proximité de l'axe de rotation (18) des disques d'épandage (11) à une distance maximale de 5 à 15 centimètres de l'axe de rotation (18) pour arriver sur les disques d'épandage (11),
- les palettes d'éjection (14, 15) sont pivotantes angulairement dans le plan des disques, par rapport à la direction radiale, et se règlent précisément à l'aide d'échelles ou d'éléments de repérage (19, 20).

2. Epandeur centrifuge d'engrais selon la revendication 1,
caractérisé en ce que
les palettes d'éjection (14, 15) sont conçues et réglables de façon que les palettes (14, 15), prévues sur les disques d'épandage (11) respectifs, assurent l'épandage dans chaque fois différents secteurs de l'image d'épandage.

3. Epandeur centrifuge d'engrais selon la revendication 1 ou 2,
caractérisé en ce que
les disques d'épandage (11) sont montés de manière amovible avec les palettes d'éjection (14, 15).

4. Epandeur centrifuge d'engrais selon la revendication 1,
caractérisé en ce que
les palettes d'éjection (14, 15, 38, 39, 45, 46) sont pivotantes angulairement dans le plan des disques et se règlent avec des angles différents par rapport à la direction radiale.

5. Epandeur centrifuge d'engrais selon l'une ou plusieurs des revendications précédentes,
caractérisé par
des palettes d'éjection pour l'épandage de couvertures qui ont des angles d'éjection plus grands par rapport à ceux correspondant à l'épandage normal.

6. Epandeur centrifuge d'engrais selon l'une ou plusieurs des revendications précédentes,
caractérisé en ce que
les extrémités extérieures des palettes d'éjection (14, 15, 38, 39, 45, 46) comportent des surfaces de déviation (21) pivotant dans des plans verticaux.

7. Epandeur centrifuge d'engrais selon une ou plusieurs des revendications précédentes,
caractérisé en ce que
dans la zone des palettes d'éjection (14, 15) sur les disques d'épandage (11), se trouvent des prolongements (22, 23) dirigés radialement et ces prolongements comportent des éléments de blocage (26, 27, 30, 31, 32) pour bloquer les palettes d'éjection (14, 15) pivotantes angulairement dans le plan des disques.

8. Epandeur centrifuge d'engrais selon la revendication 1,
caractérisé en ce que
les éléments de blocage (26, 27, 30, 31, 32) sont réalisés sous forme de trous oblongs (26, 27) dans les prolongements (22, 23), ces trous oblongs recevant des goujons prévus sur les palettes d'éjection (14, 15).

9. Epandeur centrifuge d'engrais selon les revendications 1, 7 et/ou 8,
caractérisé en ce que
pour chaque palette d'éjection (14, 15) on a deux trous oblongs écartés radialement et ces trous oblongs (24, 25, 26, 27) reçoivent les vis (28, 29, 30, 31) prévues sur les palettes d'éjection (14, 15), des écrous-papillons (32) étant associés aux vis.

10. Epandeur centrifuge d'engrais selon les revendications 1, 7, 8 et/ou 9,
caractérisé en ce que
le disque d'épandage (11) est de forme concave et les palettes d'éjection (14, 15) sont droites.

11. Epandeur centrifuge d'engrais selon au moins l'une des revendications précédentes,
caractérisé en ce que
sur chaque disque d'épandage (11), on a au moins deux palettes d'éjection (14, 15) de longueurs différentes et la plus courte palette d'éjection (14) présente le prolongement plus grand et/ou plus lourd (22) que la palette d'éjection (15) la plus longue.
